# EUROPÄISCHE PATENTSCHRIFT

(11) **EP 0 890 313 B1**
(45) Veröffentlichungstag und Bekanntmachung des Hinweises auf die Patenterteilung: **12.04.2000**
(21) Anmeldenummer: 98112839.0
(22) Anmeldetag: 10.07.1998
(51) Int. Cl.: A22B 5/00

(54) **Vorrichtung zum Entfernen des Rückenmarks und der Rückenmarkhaut aus dem Rückenmarkkanal eines Schlachttierkörpers**
Device for removing the spinal marrow and the spinal skin from the spine canal of a carcass
Dispositif pour enlever la moelle épinière et le peau de la moelle épinière de la cavité spinale d'une carcasse

(30) Priorität: 11.07.1997 DE 19729711
(43) Veröffentlichungstag der Anmeldung: 13.01.1999
(73) Patentinhaber: BVS Beratung-Verkauf-Service für die Fleischwirtschaft GmbH, 55270 Klein-Winternheim (DE)
(72) Erfinder: Kreis, Armin, 55270 Klein-Winternheim (DE)
(74) Vertreter: Luderschmidt, Schüler & Partner GbR

(56) Entgegenhaltungen:
- DE-C- 834 287
- DE-U- 9 405 286
- FR-A- 2 127 160

## Beschreibung

Die Erfindung betrifft eine Vorrichtung zum Entfernen des Rückenmarks und der Rückenmarkhaut aus dem Rückenmarkkanal eines Schlachttierkörpers.

Bei der Schlachtung von Großvieh wird der Schlachttierkörper der Länge nach halbiert, und anschließend werden sämtliche Innereien entnommen. Außerdem werden weitere nicht verwendbare Weichteile aus dem Tierkörper entfernt, bevor dieser der Weiterverarbeitung zugeführt wird. Zur Entfernung der Innereien und der nicht verwendbaren Weichteile finden im allgemeinen Messer, Schaber oder dgl. Verwendung. Nachteilig ist, daß dieser Vorgang sehr zeitaufwendig und mühsam ist. Ferner fallen die entfernten Teile oft zu Boden, von wo sie aus Gründen der Betriebssicherheit und Hygiene immer wieder aufgehoben und in speziellen Behältern entsorgt werden müssen.

Aus dem DE 295 12 854 U1 ist eine Vorrichtung zum Schneiden von Fleisch oder Fett mit einer ringförmigen, motorisch angetriebenen Schneidklinge bekannt. Die Vorrichtung verfügt über eine Absaugeinrichtung, um die abgetrennten Teile direkt einem Sammelbehälter zuführen zu können.

Nach den Forderungen der Veterinärmedizin ist bei der Schlachtung von der Länge nach halbiertem Großvieh der Rückenmarkkanal sowohl vom Rückenmark als auch von der den Rückenmarkkanal auskleidenden Rückenmarkhaut rückstandslos zu befreien.

Die bekannten Absaugvorrichtungen sind nur in der Lage, das Rückenmark selbst, nicht aber die Rückenmarkhaut zu entfernen. Artfremde Geräte, z. B. Winkelschleifer oder dgl., haben sich für diesen Zweck als unbrauchbar erwiesen, da sich die Rückenmarkhaut um den Antrieb wickelt und das Gerät nach kurzer Zeit blockiert.

Die DE 94 05 286 beschreibt eine Absaugvorrichtung für Schlachttierkörper, die in einer besonderen Ausführungsform insbesondere zur Entfernung des Rückenmarks ausgebildet ist. Die Saugdüse der bekannten Vorrichtung weist ein Kratzblech auf, mit dem das Ablösen der Gewebeteile aus dem Tierkörper unterstützt werden soll.

Der Erfindung liegt die Aufgabe zugrunde, eine betriebssicher arbeitende Vorrichtung zu schaffen, die eine rückstandslose Befreiung des Rückenmarkkanals nicht nur von dem Rückenmark, sondern auch von der Rückenmarkhaut in kurzer Zeit ohne großen Arbeitsaufwand erlaubt.

Die Lösung dieser Aufgabe erfolgt erfindungsgemäß mit den Merkmalen des Patentanspruchs 1.

Die erfindungsgemäße Vorrichtung weist ein rotierendes Fräswerkzeug auf, an dessen Stirnseite umfangsmäßig verteilt angeordnete Schneiden vorgesehen sind, die jeweils eine Schneidkante aufweisen, die an der Stirnseite der Schneiden einen im wesentlichen halbkreisförmigen Verlauf hat. Die Schneiden sind an ihren Stirnseiten derart ausgebildet, daß sie in ihren Abmessungen dem offenliegenden Rückenmarkkanal des der Länge nach halbierten Schlachtviehs entsprechen. Mit den rotierenden Schneiden kann der Rückenmarkkanal mühelos sowohl von dem Rückenmark als auch von der Rückenmarkhaut ohne Rückstände in einem einzigen Arbeitsgang befreit werden, ohne daß hierzu die Vorrichtung mehrfach angesetzt werden muß.

In einer bevorzugten Ausführungsform schließt sich an den im wesentlichen halbkreisförmigen Schneidkantenabschnitt 1 auf einer oder beiden Längsseiten der Schneiden ein gerader Schneidkantenabschnitt 1 an, wobei auf einer oder beiden Seiten der Schneiden mindestens eine an den geraden Schneidkantenabschnitt angrenzende Klinge ortsfest in dem das Fräswerkzeug teilweise umschließenden Gehäuse angeordnet ist. Die quer zur Umlaufrichtung des Fräswerkzeugs im Gehäuse angeordneten Klingen bilden zusammen mit den rotierenden Schneiden eine Art Schere, mit der die abgetrennte Rückenmarkhaut, die zähelastisch ist, so zerkleinert wird, daß sie das rotierende Fräswerkzeug nicht mehr blockieren und problemlos abgeführt werden kann. Somit ist ein störungsfreier Betrieb der Vorrichtung möglich.

Zur ausreichenden Zerkleinerung der Rückenmarkhaut sind vorteilhafterweise in dem Gehäuse zwei diagonal angeordneten Klingenpaare unmittelbar unterhalb der geraden Schneidkantenabschnitte der rotierenden Schneiden angeordnet, um eine Scherwirkung zu erzielen. Die einzelnen Schneiden werden also bei jeder Umdrehung des Fräswerkzeugs mehrfach von den Klingen erfaßt, so daß die Rückenmarkhaut fein zerkleinert wird.

In einer weiteren bevorzugten Ausführungsform ist, um den hohen hygienischen Anforderungen zu genügen, an einer der Stirnseiten des Fräswerkzeugs gegenüberliegenden Seite des Gehäuses eine Absaugöffnung und ein Absaugstutzen zum Anschluß einer Absaugleitung vorgesehen, so daß die entfernten Gewebeteile in einem dafür vorgesehenen Behälter gesammelt werden können.

Die Klingen zum Zerkleinern der Rückenmarkhaut sind vorzugsweise im Bereich der Absaugöffnung angeordnet, so daß die zerkleinerten Gewebeteile direkt in den Absaugkanal mitgerissen und nicht weiter in das Gehäuse getragen werden. Vorteilhaft ist, wenn auch außerhalb des Bereichs der Absaugöffnung weitere Klingen vorgesehen sind, um die nicht direkt abgesaugten Reste an Gewebeteilen fein zerkleinern zu können.

Die Schneiden sind vorteilhafterweise an einem Werkzeugträger befestigte Schneidplatten, die bei Verschleiß schnell und problemlos ausgewechselt werden können. Auch die Klingen können auswechselbar in dem Gehäuse befestigt sein.

Zur auswechselbaren Befestigung der Schneiden weist der Werkzeugträger in einer bevorzugten Ausführungsform radial vorspringende Halter auf, mit denen die Schneiden verschraubt sind.

Der Werkzeugträger des Fräswerkzeugs wird vorzugsweise von einem Druckluftmotor angetrieben. Es ist aber auch ein elektromotorischer Antrieb möglich.

Im folgenden wird unter Bezugnahme auf die Zeichnungen ein Ausführungsbeispiel der Erfindung näher erläutert.

Es zeigen:
- Figur 1: eine bevorzugte Ausführungsform der Vorrichtung zum Entfernen von Rückenmark und Rückenmarkhaut in der Seitenansicht,
- Figur 2: die Vorrichtung von Figur 1 mit abgenommenem Gehäusedeckel,
- Figur 3: die Vorrichtung von Figur 1 mit abgenommenem Gehäusedeckel und demontiertem Fräswerkzeug und
- Figur 4: einen Schnitt durch die Vorrichtung von Figur 1 entlang der Linie IV - IV.

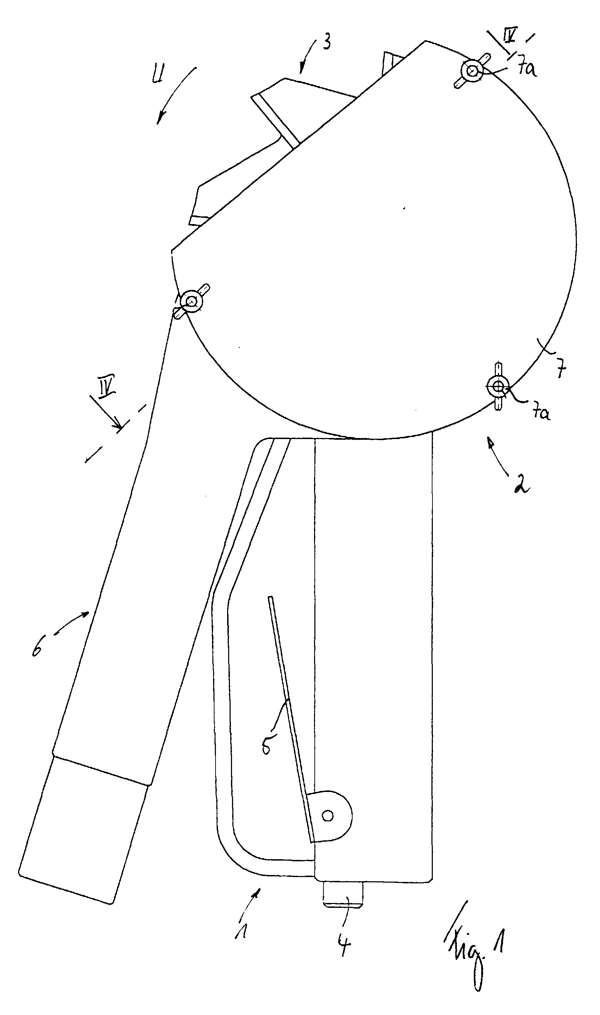

Die Vorrichtung zum Entfernen von Rückenmark und Rückenmarkhaut weist einen Handgriff 1 auf, an den sich ein an einer Seite geöffnetes, flaches Gehäuse 2 anschließt, in dem ein Fräswerkzeug 3 drehbar gelagert ist (Figur 1). Der Antrieb des Fräswerkzeugs 3 erfolgt mit einem druckluftbetriebenen Motor, der in den Handgriff integriert ist. Der Handgriff 1 weist an seinem Ende einen Druckluftanschluß 4 für eine Druckluftleitung auf. An einer Seite des Handgriffs ist ein Betätigungshebel 5 zur Steuerung der Druckluftzufuhr vorgesehen. Die mit dem Fräswerkzeug 3 entfernten Gewebeteile werden über einen Absaugstutzen 6 abgeführt, der neben dem Handgriff 1 an dem Fräswerkzeuggehäuse 2 angeschlossen ist.

Um die Vorrichtung säubern und das Fräswerkzeug demontieren zu können, ist der Gehäusedeckel 7 mit Flügelmuttern 7a verschraubt. Der Gehäusedeckel kann aber auch mit einem Schnellverschluß befestigt sein.

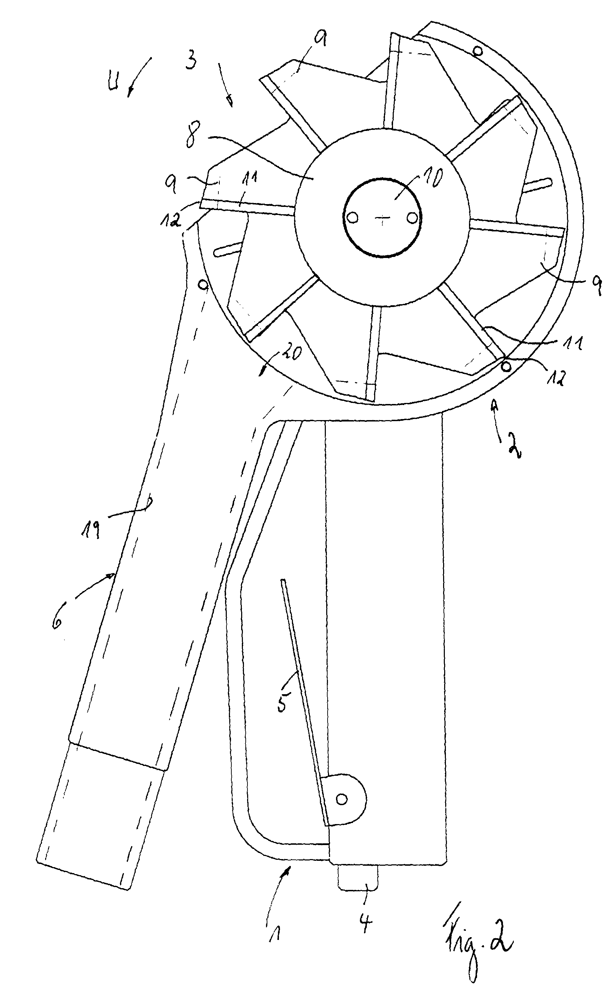

Figur 2 zeigt die Vorrichtung zum Entfernen von Rückenmark und Rückenmarkhaut mit abgenommenen Gehäusedeckel 7. Das Fräswerkzeug 3 besteht aus einem scheibenförmigen Werkzeugträger 8, der mehrere radial vorspringende Halter 9 aufweist, die jeweils nach Art eines Sägezahns ausgebildet sind. Der Werkzeugträger 8 ist drehfest mit der Abtriebswelle 10 des Druckluftmotors verbunden. An den Haltern 9 des Werkzeugträgers sind Schneidplatten 11 lösbar befestigt. Die Schneidplatten 11 weisen an ihren Stirnseiten 12 jeweils eine im wesentlichen halbkreisförmige Schneidkante 13 auf, die in gerade Schneidkantenabschnitte 14, 14' an den Längsseiten der Schneidplatten übergeht. An dem Werkzeugträger 8 sind insgesamt 8 Schneidplatten 11 befestigt, die mit den in Umlaufrichtung 14 vorderen Seiten der Halter 9 verschraubt sind.

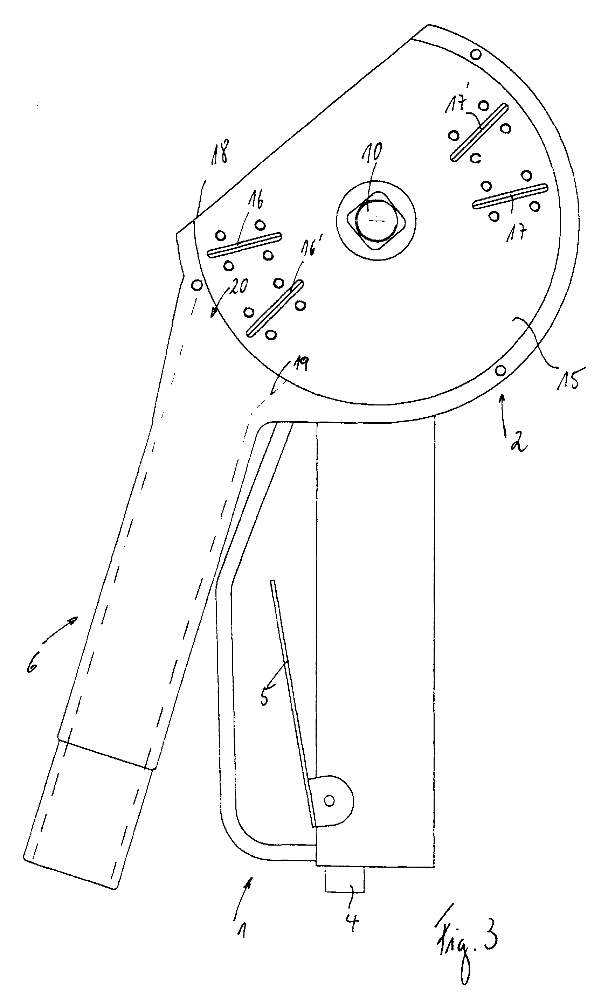

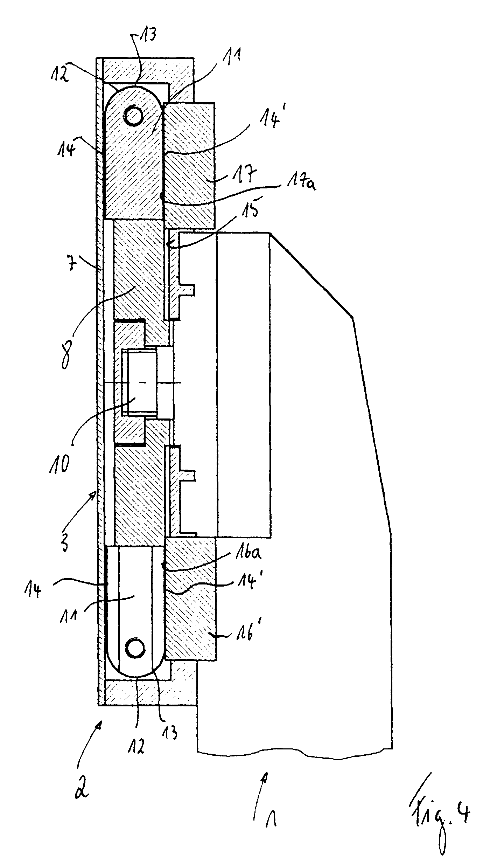

Figur 3 zeigt die Vorrichtung zum Entfernen des Rückenmarks und der Rückenmarkhaut mit abgenommenen Gehäusedeckel 7 und demontiertem Werkzeugträger 8. Wie in Figur 3 zu erkennen ist, sind mit dem Gehäuseboden 15 zwei diagonal angeordnete Klingenpaare verschraubt. Die Schneiden der rechteckförmigen Klingen 16, 16' und 17, 17' erstrecken sich in radialer Richtung. Die Klingen sind derart umfangsmäßig angeordnet, daß jeweils zwei Klingen 16, 16' in Umlaufrichtung U hinter der Gehäuseöffnung 18 und zwei Klingen 17, 17' in Umlaufrichtung vor der Gehäuseöffnung mit dem Gehäuseboden 15 verschraubt sind (Figur 4). Die Schrauben zur Befestigung der Klingen sind in Figur 3 nur andeutungsweise dargestellt.

Die Schneidkanten 16a, 17a der Klingen 16, 16' und 17, 17' liegen in der Ebene, in der die geraden Schneidkantenabschnitte der Schneidplatten 11 liegen, so daß die rotierenden Schneidplatten mit den ortsfesten Klingen eine Art Schere bilden. Aufgrund der Scherwirkung wird die Rückenmarkhaut derart zerkleinert, daß sich die Gewebeteile nicht um die Antriebswelle 10 des Fräswerkzeugs wickeln und das Fräswerkzeug blockieren können.

Auf der Höhe des in Umlaufrichtung 14 vorderen Klingenpaares 16, 16' mündet der Saugkanal 19 des Absaugstutzens 6 in das Fräswerkzeuggehäuse 2. Die Absaugöffnung ist in Figur 3 mit dem Bezugszeichen 20 versehen.

Zur Inbetriebnahme der Vorrichtung wird ein in den Figuren nicht dargestellter Druckluftschlauch eines Kompressors an den Druckluftanschluß 4 und ein nicht dargestellter Absaugschlauch an den Absaugstutzen 6 angeschlossen, der zu einem Sammelbehälter führt, in dem mittels einer Vakuumpumpe Unterdruck erzeugt wird. Durch Betätigung des Hebels 5 am Handgriff 1 wird die Vorrichtung in Betrieb gesetzt, und mit der Stirnseite des rotierenden Fräswerkzeugs 3 wird der Rückenmarkkanal des der Länge nach halbierten Schlachtviehs ausgefräst, wobei die entfernten Gewebeteile in das Gehäuse mitgerissen und dort aufgrund der Scherwirkung der Schneidplatten 11 und der Klingen 16, 16' und 17, 17' weiter zerkleinert und anschließend über den Absaugkanal 19 des Absaugstutzens 6 und den Schlauch in den Sammelbehälter abgeführt werden.

## Patentansprüche

1. Vorrichtung zum Entfernen des Rückenmarks und der Rückenmarkhaut aus dem Rückenmarkkanal eines Schlachttierkörpers, **gekennzeichnet durch** ein motorisch angetriebenes Fräswerkzeug (3), das in einem das Fräswerkzeug teilweise umschließenden Gehäuse (2) drehbar gelagert ist, wobei an der Stirnseite des Fräswerkzeugs umfahgsmäßig verteilt angeordnete Schneiden (11) vorgesehen sind, die jeweils eine Schneidkante (13) aufweisen, die an der Stirnseite (12) der Schneiden (11) einen im wesentlichen halbkreisförmigen Verlauf hat.

2. Vorrichtung nach Anspruch 1, **dadurch gekennzeichnet,** daß sich an den halbkreisförmigen Schneidkantenabschnitt (13) auf einer oder beiden Längsseiten der Schneiden (11) ein gerader Schneidkantenabschnitt (14, 14') anschließt, wobei auf einer oder beiden Seiten der Schneiden (11) mindestens eine an deren geraden Schneidkantenabschnitt angrenzende Klinge (16, 16') ortsfest in dem Gehäuse (2) angeordnet ist.

3. Vorrichtung nach Anspruch 2, **dadurch gekennzeichnet,** daß in dem Gehäuse (2) zwei diagonal angeordnete Klingenpaare (16, 16') und (17, 17') befestigt sind.

4. Vorrichtung nach einem der Ansprüche 1 bis 3, **dadurch gekennzeichnet,** daß das Gehäuse an einer der Stirnseite des Fräswerkzeugs (3) gegenüberliegenden Seite eine Absaugöffnung (20) und einen Absaugstutzen (6) zum Anschluß einer Absaugleitung aufweist.

5. Vorrichtung nach Anspruch 4, **dadurch gekennzeichnet,** daß die mindestens eine Klinge (16, 16') im Bereich der Absaugöffnung (20) angeordnet ist.

6. Vorrichtung nach einem der Ansprüche 1 bis 5, **dadurch gekennzeichnet,** daß die Schneiden an einem Werkzeugträger (8) auswechselbar befestigte Schneidplatten (11) sind.

7. Vorrichtung nach Anspruch 6, **dadurch gekennzeichnet,** daß der Werkzeugträger (8) radial vorspringende Halter (9) aufweist, an denen die Schneidplatten (11) befestigt sind.

8. Vorrichtung nach einem der Ansprüche 1 bis 7, **dadurch gekennzeichnet,** daß das Fräswerkzeug (8) mit einem Druckluftmotor angetrieben wird.

## Claims

1. An apparatus for removing the spinal cord and the spinal cord skin from the central canal of the spinal cord of the body of a slaughtered animal, characterised by a motor-driven cutting tool (3) rotatably mounted in a housing (2) partially surrounding the cutting tool, whereby, on the from face of the cutting tool and distributed around the periphery, there are cutting blades (11) each of which has a cutting edge (13) running substantially semi-circularly on the end face (12) of the cutting blades (11).

2. An apparatus according to claim 1, characterised in that adjacent the semi-circular cutting edge portion (13) and on one or both long sides of the cutting blades (11) there is a straight cutting edge portion (14, 14') whereby on one or both sides of the cutting blades (11) there is at least one blade (16, 16') disposed rigidly in the housing (2) and bounding on the straight cutting edge portion of the cutting blades (11).

3. An apparatus according to claim 2, characterised in that two diagonally disposed pairs of blades (16, 16') and 17, 17') are fixed in the housing (2).

4. An apparatus according to one of claims 1 to 3, characterised in that the housing has on one side, opposite the end face of the cutting tool (3), an extraction aperture (20) and an extraction connection (7) for connection to a vacuum extraction line.

5. An apparatus according to claim 4, characterised in that the at least one blade (16, 16') is disposed in the region of the extraction aperture (20).

6. An apparatus according to one of claims 1 to 5, characterised in that the cutting blades are cutting plates (11) which are interchangeably mounted on a tool carrier (8).

7. An apparatus according to claim 6, characterised in that the tool carrier (8) comprises radially projecting holders (9) on which the cutting plates (11) are fixed.

8. An apparatus according to one of claims 1 to 7, characterised in that the cutting tool (8) is driven by a compressed air motor.

## Revendications

1. Dispositif destiné à extraire la moelle épinière et l'enveloppe de la moelle épinière hors du canal rachidien d'une carcasse animale, caractérisé en ce qu'une fraiseuse (3), qui est actionnée par un moteur, est logée de manière à pouvoir tourner dans un boîtier (2) entourant la fraiseuse, des taillants (11) étant prévus sur la face frontale de la fraiseuse et répartis sur tout le pourtour, lesquels sont munis chacun d'une arête de coupe (13), qui présente une forme sensiblement semi-circulaire sur la face frontale (12) des taillants (11).

2. Dispositif selon la revendication 1, caractérisé en ce que la section sensiblement semi-circulaire (13) de l'arête de coupe se prolonge sur l'un ou les deux côtés longs des taillants (11) par une section droite (14, 14') de l'arête de coupe, au moins une lame (16, 16') adjacente à la section droite de l'arête de coupe, sur l'un ou les deux côtés des taillants (11), étant montée de manière fixe dans le boîtier (2).

3. Dispositif selon la revendication 2, caractérisé en ce que deux paires de lames (16, 16') et (17, 17') sont disposées en diagonale et fixées contre le boîtier (2).

4. Dispositif selon l'une quelconque des revendications 1 à 3, caractérisé en ce que le boîtier comporte sur l'un des côtés opposé aux faces frontales de la fraiseuse (3) un orifice d'aspiration (20) et une tubulure d'aspiration (6) destinée à être raccordée à un tuyau d'aspiration.

5. Dispositif selon la revendication 4, caractérisé en ce que la lame (16, 16'), au moins au nombre d'une, est disposée dans la zone de l'orifice d'aspiration (20).

6. Dispositif selon l'une quelconque des revendications 1 à 5, caractérisé en ce que les taillants sont des plaquettes de coupe (11) fixées de manière amovible contre un porte-outils (8).

7. Dispositif selon la revendication 6, caractérisé en ce que le porte-outils (8) comporte des supports (9) s'avançant dans le sens radial, contre lesquels sont fixées les plaquettes de coupe (11).

8. Dispositif selon l'une quelconque des revendications 1 à 7, caractérisé en ce que la fraiseuse (8) est actionnée par un moteur pneumatique.
